Europäisches Patentamt

European Patent Office

Office européen des brevets

(19)

(11) Numéro de publication: **0 022 028**
**B1**

(12) **FASCICULE DE BREVET EUROPEEN**

(45) Date de publication du fascicule du brevet:
**18.04.84**

(51) Int. Cl.³: **G 01 N 27/12** // G08B17/10

(21) Numéro de dépôt: **80400965.2**

(22) Date de dépôt: **27.06.80**

(54) Procédé de détection et d'analyse de gaz notamment pour la prévention des incendies.

(30) Priorité: **29.06.79 FR 7916855**

(43) Date de publication de la demande:
**07.01.81 Bulletin 81/1**

(45) Mention de la délivrance du brevet:
**18.04.84 Bulletin 84/16**

(84) Etats contractants désignés:
**AT BE CH DE FR GB IT LI LU NL SE**

(56) Documents cités:
**CA - A - 915 458**
**FR - A - 1 591 669**
**FR - A - 2 364 449**
**FR - A - 2 383 440**
**US - A - 3 864 628**
**US - A - 4 142 400**

(73) Titulaire: **COMPAGNIE CENTRALE SICLI (Société Anonyme), 2/4, rue Blaise Pascal, F-93152 Le Blanc-Mesnil (FR)**

(72) Inventeur: **Yu, Liang-Tsé, 4, Place Charles Gounod, F-94510 La Queue-en-Brie (FR)**
Inventeur: **Buvet, René Emile, 22, Avenue Cousin de Méricourt, F-94230 Cachan (FR)**
Inventeur: **Vallot, Roger, 7, Place Pinel, F-75013 Paris (FR)**
Inventeur: **Lauwick, Bernard, 7, Allée de la Haute Place, F-93160 Noisy-le-Grand (FR)**
Inventeur: **Lanore, Jean-Claude, 36, Avenue de Provence, F-92160 Antony (FR)**
Inventeur: **Detriché, Philippe, 26, Rue Charles Floquet, F-93150 Le Blanc-Mesnil (FR)**

(74) Mandataire: **Laget, Jean-Loup et al, Cabinet Pierre Loyer 18, Rue de Mogador, F-75009 Paris (FR)**

Procédé de détection et d'analyse de gaz notamment pour la prévention des incendies

La présente invention concerne un procédé d'analyse de gaz ou de vapeur pour une application à la sécurité et plus particulièrement un procédé mettant en jeu les propriétés électriques de certains semi-conducteurs organiques lorsqu'ils sont mis en présence du gaz ou de la vapeur à contrôler.

Il est déjà connu d'effectuer de la détection de gaz au moyen de semi-conducteurs organiques ou de complexes organo-métalliques dont une caractéristique électrique change en présence du gaz à détecter.

La publication de brevet FR-A-2 364 449 décrit un procédé et un dispositif d'analyse de gaz utilisant des capteurs à film semi-conducteur déposé sur un support isolant. Pour constituer le film semi-conducteur, ce document mentionne notamment des complexes organiques quinoniques, des complexes organo-métalliques de ligands polymériques, et des complexes organiques à transfert de change.

Le brevet canadien CA-A-915 458 décrit un procédé et un dispositif d'identification de gaz utilisant un film semi-conducteur de safranine comme détecteur de gaz.

Le brevet américain US-A-4 142 400 décrit un détecteur de dioxyde d'azote à film semi-conducteur constitué par des polymères poly-aromatiques.

Actuellement, l'utilisation de semi-conducteurs (organiques ou non) en détection de gaz, se heurte à des problèmes de manque de sélectivité et de réversibilité. En particulier, ces semi-conducteurs sont le plus souvent sensibles à l'humidité, la réponse donnée par les variations de l'humidité ambiante pouvant être du même ordre, ou même supérieure à celle donnée par le gaz à détecter. Pour d'autres applications et, en particulier, dans le cas de la sécurité incendie, ces semi-conducteurs peuvent présenter une sélectivité qui n'aille pas dans le sens de la sécurité. En effet, ils peuvent avoir une réponse précoce lors de feux vifs, et être lents à détecter un feu couvant.

La présente invention se propose donc de concevoir des éléments capteurs sélectifs mais couvrant bien tout le risque à protéger et présentant de plus un bon caractère de réversibilité.

Il apparaît qu'un grand nombre d'éléments semi-conducteurs voient leurs propriétés modifiées en présence de certains gaz, et en particulier la conductivité. On trouvera notamment un exposé de couplage entre les propriétés d'échanges et les propriétés électriques des semi-conducteurs dans l'ouvrage intitulé «chimie macromoléculaire» (Hermann).

Les gaz le plus souvent rencontrés au cours d'une combustion sont: $CO$, $CO_2$, $NO$, $NO_2$, $HCl$, $NH_3$, $HCN$, $SO_2$. Il apparaît donc que si l'on veut contrôler un phénomène de combustion, il faut pouvoir détecter ces gaz caractéristiques. L'utilisation de semi-conducteurs dont on mesure l'évolution de la conductivité en présence de ces gaz permet ce contrôle.

En dehors du risque d'incendie lié aux combustions déjà déclarées, qui se manifestent par un feu couvant ou vif, il peut être utile de prévenir le risque d'explosion lié à la présence de certains gaz comme l'hydrogène, le méthane, le propane ou le butane. La détection de ces gaz peut être assurée au moyen de semi-conducteurs dont la conductivité varie en leur présence.

L'invention a pour objet un procédé de détection et d'analyse de gaz ou de vapeur applicable à la prévention des risques liés à la combustion et consistant à contrôler le milieu à protéger par une unité sensible élémentaire comprenant un élément semi-conducteur organique dont la conductivité évolue en présence du ou des gaz et/ou vapeurs à contrôler, caractérisé en ce que le semi-conducteur organique appartient à l'un des groupes suivants:
- les amines ou polyamines aromatiques salifiées ou non;
- les indophénols;
- les dérivés phénoliques contenant ou non des fonctions azotées et/ou des groupes carboxyliques;
- les dérivés azoïques ou diazoïques aromatiques contenant ou non d'autres types de groupements azotés;
- les amino-acides;
- les polypérylènes ou le polyvinylpyridine en tant que polymères donneurs;
et en ce que l'on fait subir au produit semi-conducteur organique une préparation par des solutions ou atmosphères de niveaux variables d'oxydation.

Selon des modes de réalisation de l'invention:
- on fait subir au produit semi-conducteur organique un mélange préalable à des éléments inertes;
- le produit semi-conducteur organique est mis en œuvre selon une technique de peinture;
- le produit semi-conducteur organique est mis en œuvre selon une technique d'évaporation sous vide;
- le produit semi-conducteur organique est mis en œuvre selon une technique de frittage;
- le produit semi-conducteur organique est mis en œuvre selon une technique de dépôt électrolytique;
- le produit semi-conducteur organique est mis en œuvre en réalisant des collodions;
- on fait subir à l'unité sensible élémentaire des traitements complémentaires tels qu'une irradiation infra-rouge ou X, ou une compression;
- on dispose sous forme de capteur une seule unité sensible, ou un montage du type série et/ou parallèle de plusieurs unités sensibles élémentaires, de façon à couvrir tout un spectre caractéristique du risque à prévenir, chaque unité sensible assurant à elle seule une détection;

– on interpose entre le capteur et le milieu à protéger des filtres ou membranes ayant des propriétés de diffusivité sélective vis-à-vis des gaz ou vapeurs à détecter, de façon à assurer la prévention d'un risque spécifique en s'affranchissant des parasites et poussières;

– on utilise deux capteurs dans un pont de mesure, l'un servant de référence;

– on analyse les variations relatives du signal délivré par le capteur.

Les caractéristiques de l'invention ressortent de la description suivante faite avec référence au dessin annexé sur lequel on peut voir:

fig. 1, une vue de trois modes de réalisation de supports utilisables pour la fabrication des unités sensibles;

fig. 2, un schéma simplifié d'un mode de réalisation d'un circuit électrique de détection et d'alarme à pont Wheatstone, fonctionnant par franchissement de seuil;

fig. 3, un schéma simplifié d'un autre mode de réalisation d'un circuit électrique de détection et d'alarme fonctionnant par variation relative d'une grandeur électrique comme la résistance de l'unité sensible;

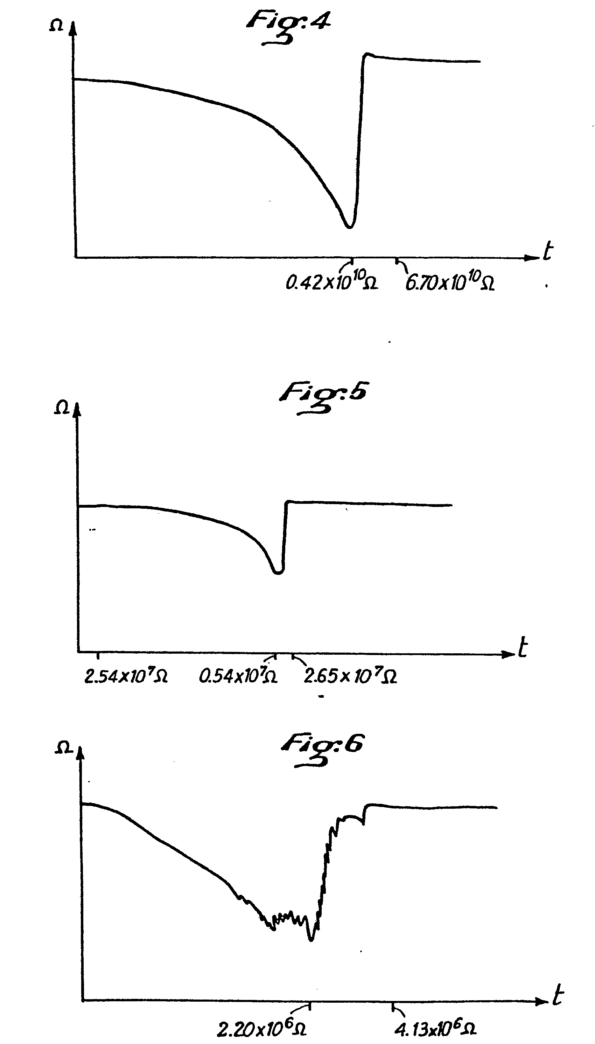

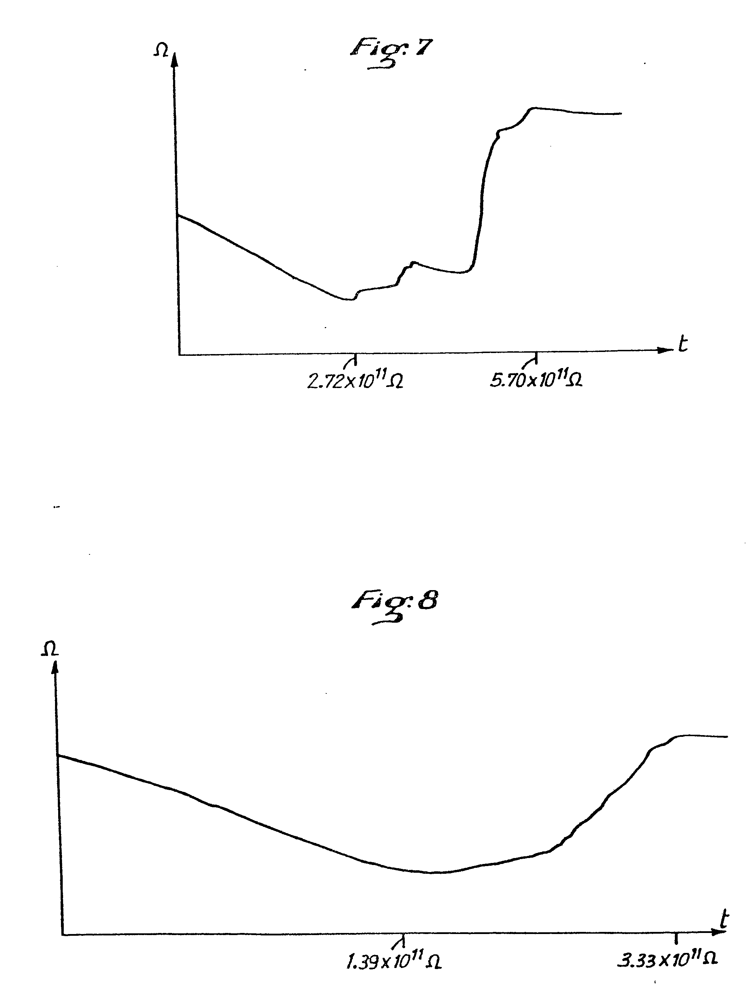

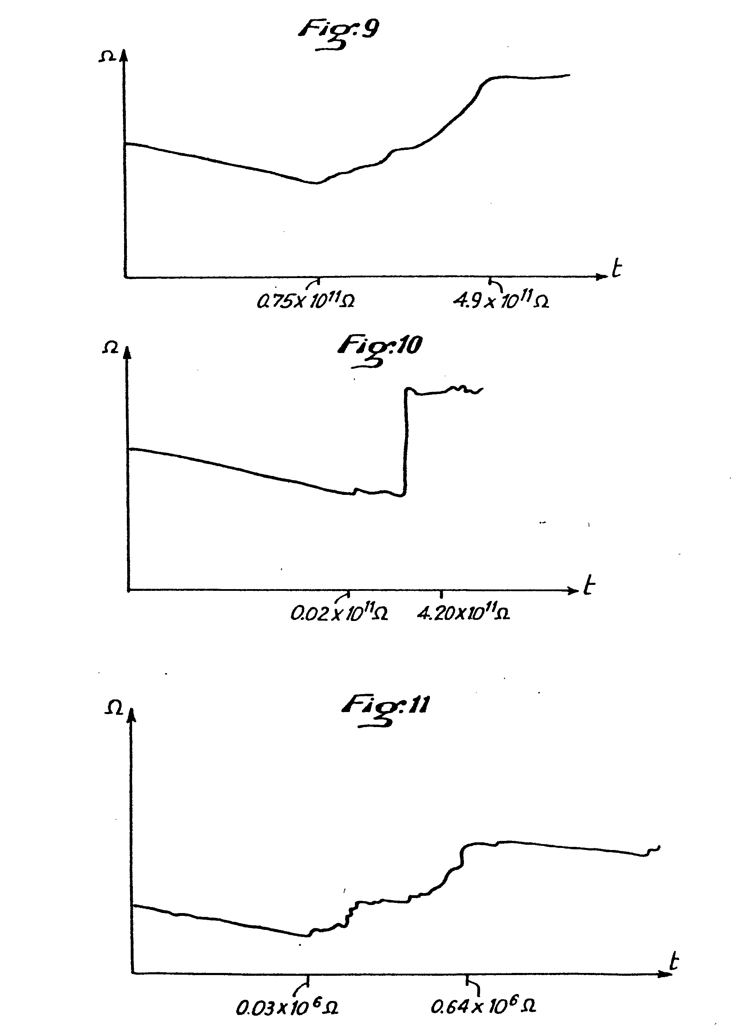

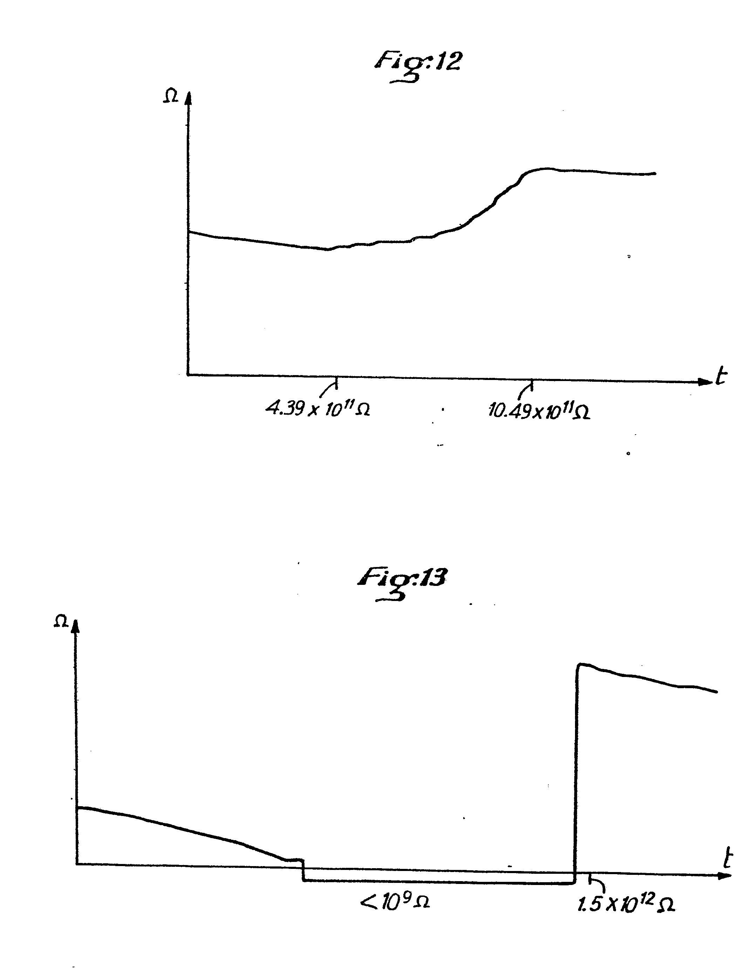

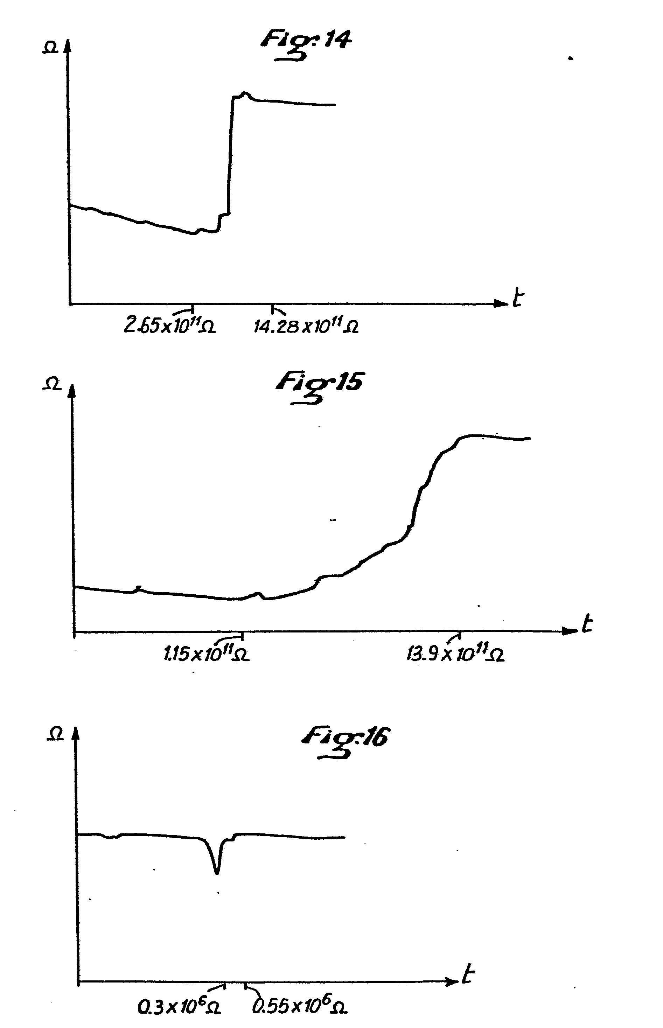

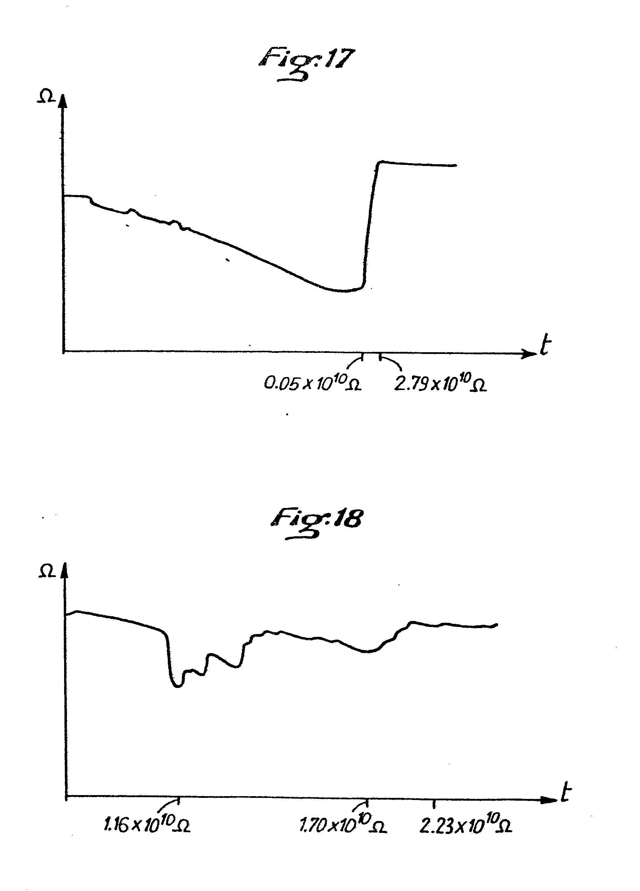

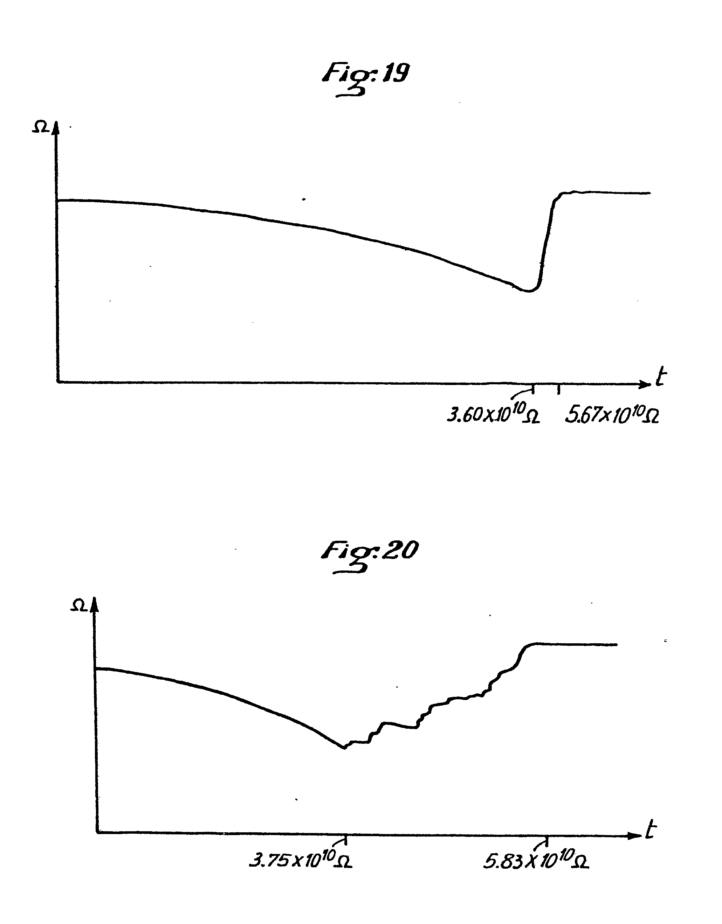

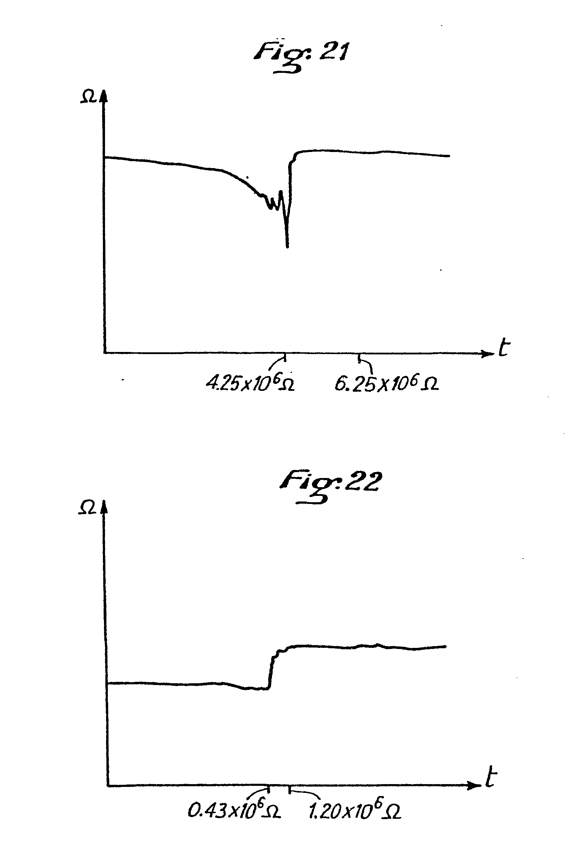

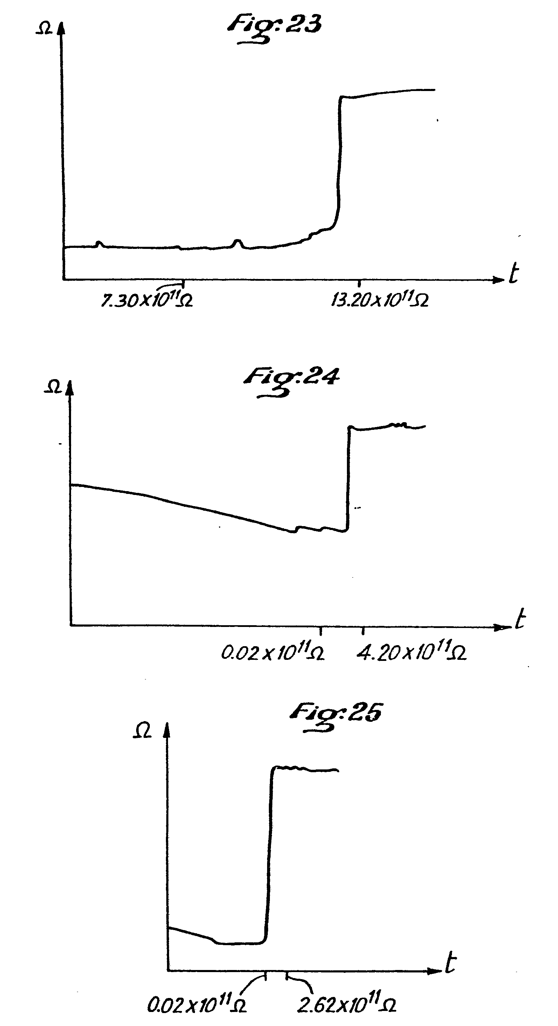

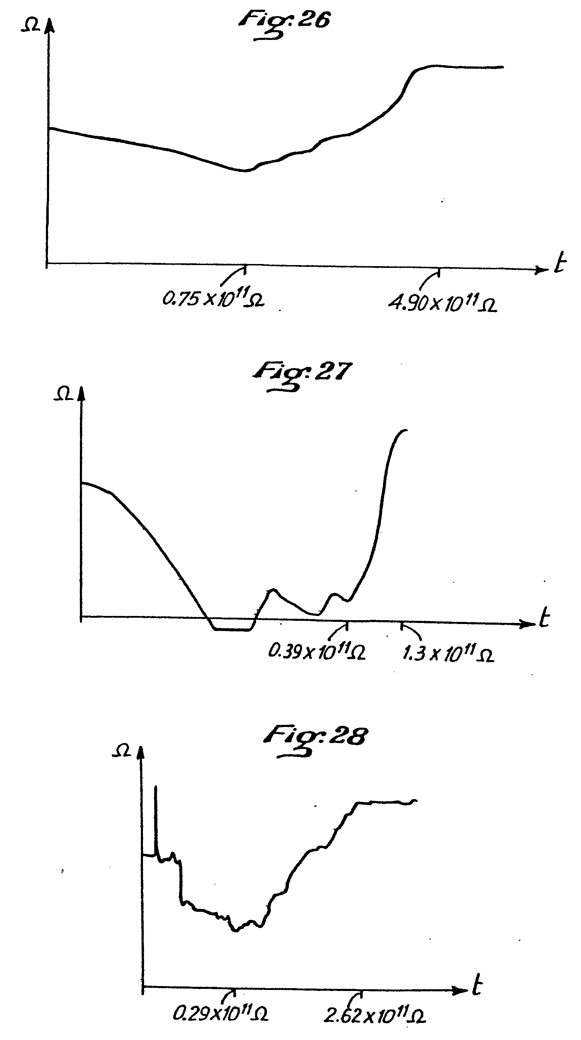

figs 4 à 28, les courbes représentatives de la variation de la résistance électrique de l'unité sensible élémentaire en fonction du temps dans les différents exemples retenus.

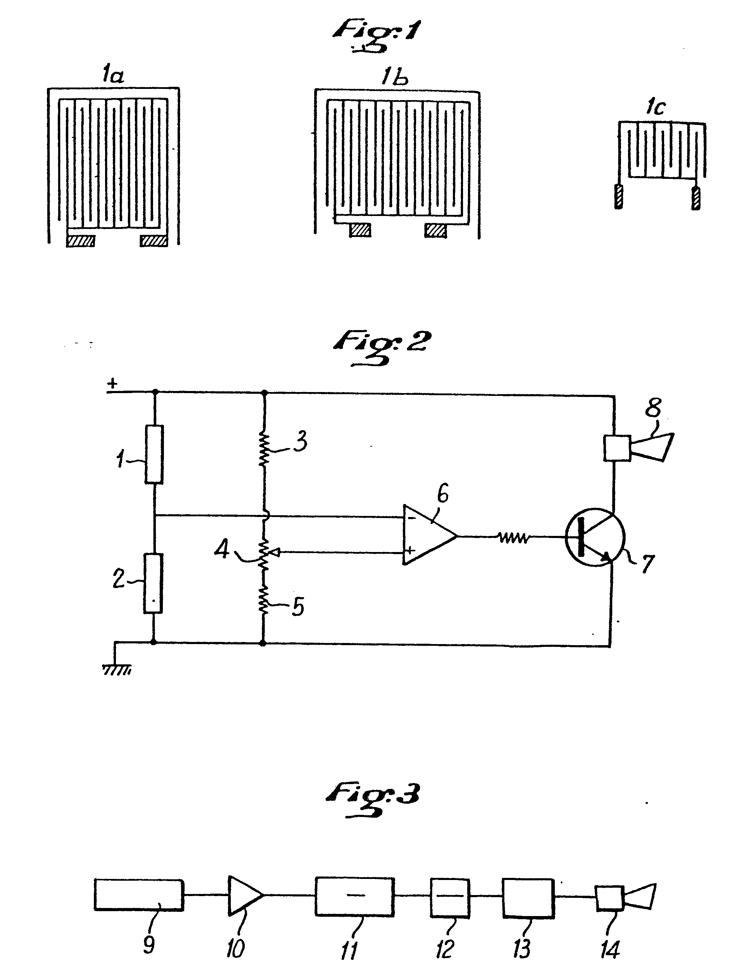

En se reportant à la fig. 1, on voit que les unités sensibles sont constituées d'un support isolant portant un jeu d'électrodes en forme de peignes, selon les variantes 1-a, 1-b et 1-c, sur lequel on vient déposer un semi-conducteur organique au moyen d'une technique de peinture par exemple.

Sur la fig. 2, une unité sensible élémentaire active 1 est montée en série avec une unité sensible de référence 2 dans une branche d'un pont de Wheatstone. L'autre branche du pont est constituée par une résistance fixe 3 en série avec un potentiomètre 4 et une résistance fixe 5 par exemple.

Le curseur du potentiomètre 4 est relié à une entrée d'un comparateur 6 dont l'autre entrée (inversée par exemple) est reliée au point commun aux deux unités sensibles 1 et 2.

La sortie du comparateur 6 est reliée à la base d'un transistor 7 dans le circuit de collecteur duquel est branché un avertisseur sonore 8, par exemple. L'ensemble du circuit étant sous tension, le réglage du curseur du potentiomètre 4 permet de fixer un seuil caractéristique d'un niveau de sécurité. Si l'unité sensible active est affectée par une émission de gaz, sa résistance varie et le comparateur détecte un déséquilibre.

Le transistor 7 devient alors conducteur et l'avertisseur sonore 8 fonctionne. Ce circuit de détection permet de signaler le franchissement d'un seuil.

Le circuit de la fig. 3 comprend une seule unité sensible élémentaire 9 qui donne en permanence un signal proportionnel à sa résistance R. Ce signal électrique est amplifié par un amplificateur 10, puis dérivé en 11. A la sortie du dérivateur 11, on a donc un signal proportionnel à la dérivée de la résistance $dR/dt$. Ce signal dérivé passe dans un filtre 12.

Si le signal dérivé $dR/dt$ est très faible ou très élevé, le filtre permet de l'éliminer de façon à ne pas déclencher d'alarme car les perturbations trop faibles ou trop fortes ne correspondent pas au phénomène à surveiller.

Si le signal dérivé franchit le filtre 12, il déclenche un circuit 13 à transistor par exemple pour la commande de l'avertisseur sonore 14.

On a obtenu avec la technique de peinture utilisée des unités sensibles élémentaires à base de produits semi-conducteurs organiques selon la liste ci-après. Chacun de ces éléments capteurs mis en présence d'un ou plusieurs produits de combustion présente une modification de résistance mesurable.

Chacun de ces éléments capteurs a également dans ces conditions présenté une bonne propriété de réversibilité.

1. Groupe des dérivés quinoniques polymères ou non contenant ou non d'autres types de fonctions polaires, en particulier:
– Chloranile
– Polybenzoquinone

2. Groupe des amines ou polyamines aromatiques salifiées ou non, en particulier:
– Tartrazine
– Bleu de Toluidine
– Violet de β Naphtol
– Bleu lumière
– Polyaniline réduite
– Polypyrrole réduit.

3. Groupe des amines ou polyamines aromatiques et hétérocycliques salifiées ou non, en particulier:
– Safranine
– Indole
– Jaune d'acridine
– Bleu de méthylène
– Polypyrrole

4. Groupe des indophénols, en particulier:
– Bleu d'indophénol
– Phénol-indophénol
– Phénol-indo-dichlorophénol
– Polyaniline oxydée

5. Groupe des dérivés phénoliques contenant ou non des fonctions azotées, des groupes carboxyliques en particulier:
– Galléine
– Dichloro-2'-7' Fluorescéine
– Résazurine

6. Groupe des dérivés azoïques ou diazoïques aromatiques contenant ou non d'autre types de groupements azotés, en particulier:
– Ethyl orangé
– Jaune d'aniline

7. Groupe des amides ou polyamides aromatiques contenant ou non d'autres types de groupements azotés, en particulier:

– Benzanilide
– Nitro-4-acétanilide

8. Groupe des amino-acides contenant ou non des groupes amides primaires ou secondaires, en particulier:
– L (-) Histidine
– Glycine
– L-leucyl-leucyl-leucine
– Acide L-glutamique
– N-Acétyl-L Triptophane, amide
– N-Acétyl Thyrosine, amide

9. Groupe des polymères donneurs, en particulier:
– Polypérylènes
– Polyvinyl-pyridine

10. Groupe des complexes organiques à transfert de charges comportant un polymère donneur associé à un accepteur fort ou faible, en particulier:
– Complexe polybenzoquinone-polypérylène
– Complexe chloranile-polypérylène

Un produit appelé polypérylène a été obtenu par condensation de dianhydride pérylènique sur lui-même en présence d'un catalyseur FRIEDEL-KRAFT, entre 200 et 300°.

Les courbes des exemples 1 à 10 donnent des réponses de ces éléments capteurs, pour chacun des groupes précédents, et pour des feux d'alcool ou des combustions avec ou sans flamme de cellulose, pour quelques-uns de ces produits. Dans le cas d'un feu d'alcool, on contrôle la combustion de 0,5 cm³ d'alcool, mis dans une coupelle de diamètre 5 cm, l'unité sensible étant à 20 cm au-dessus de cette coupelle.

Pour la cellulose, on prend un échantillon de 4 cm², l'unité sensible étant à 10 cm au-dessus de cet échantillon.

Pour la combustion sans flamme, l'échantillon est déposé sur une plaque à environ 220°.

Pour chacun des exemples, le sens de défilement du papier est de la gauche vers la droite, à 1 mm/s.

En ordonnées est portée la valeur de la résistance électrique de l'unité sensible élémentaire.

Chacune de ces courbes met en évidence la propriété de récupération, celle-ci restant caractéristique du produit semi-conducteur utilisé et du gaz ou du mélange de gaz analysé.

Exemple 1 – Produit du groupe 1
Fig. 4:
Benzoquinone
Solvant-éther
Réponse à un feu sans flamme de cellulose
Temps de réponse:                    3 s
$\Delta R/R_{max}$:                  −93.7%
Temps de récupération:              >67 s

Exemple 2 – Produit du groupe 2
Fig. 5:
Polypyrrole
Solvant-éther

Combustion sans flamme de cellulose
Temps de réponse.                    2 s
$\Delta R/R_{max}$:                  −79.6%
Temps de récupération:              >45 s

Fig. 6:
Bleu lumière
Solvant-eau
Temps de séchage après mise en œuvre:    48 h
Réponse à un feu d'alcool
Temps de réponse:                   14 s
$\Delta R/R_{max}$:                 −46.7%
Temps de récupération:             >39 s

Exemple 3 – Produit du groupe 3
Fig. 7:
Bleu de méthylène-éosine
Solvant-eau
Temps de séchage après mise en œuvre:
                                    48 h
Réponse à un feu d'alcool
Temps de réponse:                   17 s
$\Delta R/R_{max}$:                 −52.3%
Temps de récupération:             >60 s

Exemple 4 – Produit du groupe 4
Fig. 8:
Bleu d'indophénol
Solvant-éther
Réponse à un feu d'alcool
Temps de réponse:                   55 s
$\Delta R/R_{max}$:                 −58.3%
Temps de récupération:             >90 s

Exemple 5 – Produit du groupe 5
Fig. 9:
Dichloro-2'-7'-Fluorescéine
Solvant-eau
Temps de séchage après mise en œuvre:    48 h
Réponse à un feu d'alcool
Temps de réponse:                   42 s
$\Delta R/R_{max}$:                 −84.7%
Temps de récupération:             >60 s

Fig. 10:
Galléine
Solvant $C\,Cl_4$
Réponse à un feu sans flamme de cellulose
Temps de réponse: négigeable
$\Delta R/R_{max}$:                 −99.5%
Temps de récupération:             >70 s

Exemple 6 – Produit du groupe 6
Fig. 11:
Jaune d'aniline
Solvant-éther
Réponse à un feu d'alcool
Temps de réponse:                   39 s
$\Delta R/R_{max}$:                 −95%
Temps de récupération:             >50 s

Exemple 7 – Produit du groupe 7
Fig. 12:
Nitro-4-acétanilide
Solvant-eau

Temps de séchage après mise en œuvre: 48 h
Réponse à un feu d'alcool
Temps de réponse: 47 s
$\Delta R/R_{max.}$: −58.2%
Temps de récupération: >40 s

Fig. 13:
Benzanilide
Support utilisé pour peindre-eau
Temps de séchage après mise en œuvre: 48 h
Réponse à une combustion sans flamme de cellulose
Temps de réponse: négligeable
$\Delta R/R_{max.}$: −99.9%
Temps de récupération: >120 s

Exemple 8 − Produit du groupe 8
Fig. 14:
(1)Histidine
Solvant-éther
Réponse à une combustion sans flamme de cellulose
Temps de réponse: négligeable
$\Delta RRR_{max.}$: −39.4%
Temps de récupération: >30 s

Fig. 15:
Réponse à un feu d'alcool
Temps de réponse: 53 s
$\Delta R/R_{max.}$: −91.7%
Temps de récupération: >40 s

Exemple 9 − Produit du groupe 9
Fig. 16:
Polypérylène
Solvant-alcool
Réponse à un feu sans flamme ce cellulose
Temps de réponse: 5 s
$\Delta R/R_{max.}$: −45.5%
Temps de récupération: 5 s

Exemple 10 − Produit du groupe 10
Fig. 17:
Complexe chloranile-polypérylène
Solvant-acétone
Combustion sans flamme de cellulose
Temps de réponse: 3 s
$\Delta R/R_{max.}$: −98%
Temps de récupération: >70 s

Fig. 18:
Complexe chloranile-polypérylène
Solvant-acétone
Combustion alcool
Temps de réponse: 11 s
$\Delta R/R_{max.}$: −28%
Temps de récupération: >25 s

Exemple 11 − Produit du groupe 7
Mise en œuvre de benzanilide à partir d'un collodion obtenu avec de la gélatine.
Fig. 19:
Combustion sans flamme cellulose

Temps de réponse: 6 s
$\Delta R/R_{max.}$: −37%
Temps de récupération: >110 s

Fig. 20:
Réponse à un feu d'alcool
Temps de réponse: 42 s
$\Delta R/R_{max.}$: −36%
Temps de récupération: >60 s

Exemple 12 − Influence de la préparation dans des
milieux de p.h. différents sur la réponse du capteur.
Réponse à un feu sans flamme de cellulose
Fig. 21:
Polyaniline (lavée)
Solvant-éther
Temps de réponse: 2 s
$\Delta R/R_{max.}$: −32%
Temps de récupération: >40 s

Fig. 22:
Polyaniline (acide)
Solvant-éther
Temps de réponse: 5 s
$\Delta R/R_{max.}$: −64%
Temps de récupération: plusieurs heures.

Exemple 13 − Montage en parallèle d'une unité
sensible élémentaire à base de galléine et d'une
unité sensible élémentaire à base de dichloro 2'-
7'-fluorescèine
A) Réponse à une combustion sans flamme de
cellulose

Fig. 23:
Dichloro-2'-7'-fluorescèine
Solvant-eau
Temps de séchage: 24 h
$\Delta R/R_{max.}$: −45%

Fig. 24:
Galléine
Solvant $C\,Cl_4$
$\Delta R/R_{max.}$: −99.6%

Fig. 25:
Montage en parallèle des deux unités sensibles
élémentaires précédentes.
$\Delta R/R_{max.}$: −99.2%

B) Réponse à un feu d'alcool
Fig. 26:
Dichloro-2'-7'-fluorescèine
Solvant-eau
Temps de séchage: 24 h
$\Delta R/R_{max.}$: −85%

Fig. 27:
Galléine
Solvant $C\,Cl_4$
$\Delta R/R_{max.}$: −62%

Fig. 28:
Montage en parallèle des deux unités sensibles

élémentaires précédentes

$\Delta R/R_{max.}$:            $-89\%$

Il apparaît donc que le montage d'unités sensibles élémentaires utilisant pour chacune des anomalies caractéristiques du risque à contrôler le produit semi-conducteur le plus adapté, permet d'obtenir la meilleure sensibilité pour tout le spectre des anomalies à contrôler.

Certains des produits précédemment étudiés présentent une modification de leur conductivité lorsqu'ils sont mis en présence de gaz présentant un risque d'explosion, tels que l'hydrogène, le méthane, le propane ou le butane. Ainsi la variation relative à la résistance électrique de l'unité sensible élémentaire, a été mesurée en présence de différents gaz pour les produits suivants:

Hydrogène
Produit du groupe 1

   Chloranile          $\Delta R/R = + \;\; 90\%$

Produit du groupe 2

   Tartrazine          $\Delta R/R = + \; 150\%$

Produit du groupe 3

   Safranine           $\Delta R/R = + \; 150\%$

Produit du groupe 5

   Galléine            $\Delta R/R = + \; 200\%$

Méthane
Produits du groupe 2

   Tartrazine          $\Delta R/R = + \;\; 85\%$

   Bleu de Toluidine    $\Delta R/R = + \; 150\%$

   Bleu lumière        $\Delta R/R = + \; 106\%$

Produit du groupe 8

   Glycine            $\Delta R/R = + \; 15\,000\%$

Propane
Produit du groupe 3

   Safranine           $\Delta R/R = + \; 110\%$

Produit du groupe 5

   Galléine            $\Delta R/R = + \;\; 80\%$

Butane
Produit du groupe 3

   Safranine           $\Delta R/R = + \; 140\%$

Produit du groupe 5

   Galléine            $\Delta R/R = + \;\; 40\%$

La mise en œuvre de ces produits peut s'effectuer selon un certain nombre de techniques, le but étant d'obtenir une bonne tenue mécanique de l'élément semi-conducteur au cours de son utilisation ainsi qu'une surface d'échange optimale entre cet élément actif et l'ambiance.

Le produit semi-conducteur des groupes 1 à 10 peut être déposé en une couche mince sur un support isolant muni d'électrode (fig. 1) selon une technique de peinture ou d'enduction. Le produit actif, c'est-à-dire le produit des groupes de 1 à 10, éventuellement après traitement et mise en solution ou en suspension, est alors mis en solution ou en suspension dans un support: eau, C $Cl_4$, éther, alcool, benzène... Ce support peut être simplement un support du produit semi-conducteur pour la peinture, mais peut également intervenir au niveau de ses propriétés (accroissement de sélectivité, augmentation de sensibilité...). Le phénomène à contrôler conduisant à une modification de la conductivité, l'analyse de ce phénomène se fera en mesurant l'évolution de la résistance aux bornes des électrodes (figs 2 et 3).

La mise en œuvre du produit semi-conducteur peut s'effectuer selon des techniques de frittage. Dans ce cas, on peut utiliser les mêmes supports solides que ceux retenus pour la mise en œuvre par la technique de peinture (fig. 1). Sur ce support on dépose de 5 à 10 mg. de produit par $cm^2$, et l'on comprime le tout à des pressions variables entre 1 et 3 t/cm². Le contrôle du phénomène se fait comme précédemment (figs 2 et 3).

La mise en œuvre du produit semi-conducteur peut s'effectuer selon des techniques d'évaporation sous vide. Le support isolant muni d'électrodes servant au dépôt et le traitement par mesure de grandeurs électriques (figs 2 ou 3), sont identiques à ceux retenus pour la technique de peinture.

La mise en œuvre du produit semi-conducteur peut s'effectuer selon des techniques de dépôts électrolytiques, et ceci pour certains polymères obtenus par voie électrochimique.

On peut par exemple prendre une solution de sulfate de pyrrole. Dans cette solution, on met une électrode de graphite (ou de tous métaux inattaquables) que l'on porte à un potentiel supérieur à 800 mV E.N.H. (électrode normale d'hydrogène). Dans ces conditions, il se forme un dépôt de polypyrrole provenant de l'oxydation du pyrrole. Il suffit ensuite de placer les électrodes sur ce dépôt pour disposer d'une unité sensible élémentaire dont on contrôle l'évolution par les traitements décrits aux figs 2 et 3.

La mise en œuvre de produits semi-conducteurs peut s'effectuer en réalisant des collodions avec des polymères ou des copolymères comme liant et en particulier l'acétate de polyvinyle ou le chlorure de polyvinyle. Ce liant sert de support au produit semi-conducteur mais peut aussi intervenir au niveau de la réponse du capteur pour ce qui est de sa sélectivité. Il intervient alors par ses propriétés de diffusivité sélective vis-à-vis de différents gaz et, par exemple vis-à-vis de la vapeur d'eau, par ses propriétés hydrophiles (gélatine), ou hydrophobes (polyvinylacétate, polystyrène). Cette propriété de diffusivité sélective constitue un résultat bien connu dans l'étude des membranes. Dans le cas particulier d'un collodion à base de gélatine, la mise en œuvre s'effectue de la façon suivante: on dissout à chaud (50–60°) 1% en poids de gélatine dans 20 cc. d'eau distillée. On prélève 7–8 cc. de la solution, et on lui ajoute 1 ou 2 g du composé semi-conducteur. On fait une suspension de 1 à 2 heures, que l'on étale sur un support muni d'électrodes.

L'exemple 11 nous donne la réponse obtenue pour une combustion d'alcool et une combustion sans flamme de cellulose pour un collodion de ce type mettant en œuvre de la benzanilide.

Dans le but d'adapter les caractéristiques (résistance, sensibilité, sélectivité) de l'unité sensible élémentaire, il est possible d'envisager un certain nombre de traitements:

Au niveau du produit semi-conducteur utilisé:
- mélange produit semi-conducteur – élément inerte
- préparation du produit semi-conducteur dans des solutions ou des atmosphères de niveaux variables d'oxydation ou de réduction (Exemple 12, comparer les deux courbes).
- mélange de plusieurs produits semi-conducteurs.

Au niveau de l'unité sensible élémentaire:
- irradiation infra-rouge,
- irradiation X,
- compression.

On peut adapter la sensiblité et/ou la sélectivité du capteur et ainsi s'affranchir de grandeurs perturbatrices (humidité, éclairement...) en regroupant des unités sensibles élémentaires élaborées chacune à partir d'un seul produit semi-conducteur ou d'un mélange de ces produits, en des montages du type série et/ou parallèle, en interposant entre le capteur et l'ambiance des filtres ou membranes sélectifs vis-à-vis des gaz ou vapeurs à contrôler. Ce type de montage permet de plus dans le cas où la surveillance d'un risque suppose le contrôle de plusieurs gaz, de pouvoir utiliser pour chacun de ces gaz, l'unité sensible élémentaire la plus adaptée (Exemple 13, c'est le montage en parallèle qui donne la meilleure réponse).

La détection peut se faire en utilisant un système du type à pont de Wheatstone (fig. 2). Dans ce cas, on utilise une unité sensible élémentaire active et une en référence. Ce dernier élément pouvant subir avec un certain retard les variations de l'ambiance, cela permet de s'affranchir de certaines variations lentes qui ne seraient pas créées par le risque à détecter. Dans ce cas, on signale l'existence d'une perturbation liée à ce risque pour un certain déséquilibre du pont fixé au préalable et caractéristique du risque et du niveau de sécurité recherchés.

La détection peut également se faire à l'aide d'un seul élément capteur et en analysant les variations relatives délivrées par ce capteur (fig. 3). Dans ce cas, on signale la présence du ou des gaz à détecter lorsque la valeur de ces variations relatives est comprise dans un certain intervalle caractéristique du risque à prévenir.

Ce type de traitement de signal permet de plus de s'affranchir des grandeurs perturbatrices (variations d'humidité, éclairement). Ce type de traitement a déjà été développé pour des applications antérieures; il est entre autres utilisé dans le détecteur ionique type D.S.I. 40 (nom commercial désignant le Détecteur SICLI ionique, modèle 40) de la gamme SICLI. Il permet en particulier dans ce cas de s'affranchir des variations lentes de l'ambiance (humidité, pression, température...).

Ce type de traitement peut s'adapter à chaque anomalie particulière à contrôler.

## Revendications

1. Procédé de détection et d'analyse de gaz ou de vapeur applicable à la prévention des risques liés à la combustion et consistant à contrôler le milieu à protéger par une unité sensible élémentaire comprenant un élément semi-conducteur organique dont la conductivité évolue en présence du ou des gaz et/ou vapeurs à contrôler, caractérisé en ce que le semi-conducteur organique appartient à l'un des groupes suivants:

- les amines ou polyamines aromatiques salifiées ou non;
- les indophénols;
- les dérivés phénoliques contenant ou non des fonctions azotées et/ou des groupes carboxyliques;
- les dérivés azoïques ou diazoïques aromatiques contenant ou non d'autres types de groupements azotés;
- les amino-acides;
- les polypérylènes ou le polyvinyl-pyridine en tant que polymères donneurs;

et en ce que l'on fait subir au produit semi-conducteur organique une préparation par des solutions ou atmosphères de niveaux variables d'oxydation.

2. Procédé de détection selon la revendication 1, caractérisé en ce que l'on fait subir au produit semi-conducteur organique un mélange préalable à des éléments inertes.

3. Procédé de détection selon l'une des revendications 1 ou 2, caractérisé en ce que le produit semi-conducteur organique est mis en œuvre selon une technique de peinture.

4. Procédé de détection selon l'une des revendications 1 ou 2, caractérisé en ce que le produit semi-conducteur organique est mis en œuvre selon une technique d'évaporation sous vide.

5. Procédé de détection selon l'une des revendications 1 ou 2, caractérisé en ce que le produit semi-conducteur organique est mis en œuvre selon une technique de frittage.

6. Procédé de détection selon l'une des revendications 1 ou 2, caractérisé en ce que le produit semi-conducteur organique est mis en œuvre selon une technique de dépôt électrolytique.

7. Procédé de détection selon l'une des revendications 1 ou 2, caractérisé en ce que le produit semi-conducteur organique est mis en œuvre en réalisant des collodions.

8. Procédé de détection selon l'une quelconque des revendications 1 à 7, caractérisé en ce que l'on fait subir à l'unité sensible élémentaire des traitements complémentaires tels qu'une irradiation infra-rouge ou X, ou une compression.

9. Procédé de détection selon l'une des revendications 1 à 8, caractérisé en ce qu'on dispose sous forme de capteur une seule unité sensible, ou un montage du type série et/ou parallèle de plusieurs unités sensibles élémentaires, de façon à couvrir tout un spectre caractéristique du risque à prévenir, chaque unité sensible assurant à elle seule une détection.

10. Procédé de détection selon la revendication 9, caractérisé en ce que l'on interpose entre le capteur et le milieu à protéger des filtres ou membranes ayant des propriétés de diffusivité sélective vis-à-vis des gaz ou vapeurs à détecter, de façon à assurer la prévention d'un risque spécifique en s'affranchissant des parasites et poussières.

11. Procédé de détection selon l'une des revendications 1 à 10, caractérisé en ce que l'on utilise deux capteurs dans un pont de mesure, l'un servant de référence.

12. Procédé de détection selon l'une des revendications 1 à 10, caractérisé en ce que l'on analyse les variations relatives du signal délivré par le capteur.

## Claims

1. A method for the detection and analysis of gas or vapour, applicable to the prevention of risks due to combustion and comprising controlling the medium to be protected by an elementary sensitive unit including an organic semiconductor element the conductivity of which changes in the presence of the gas or gases and/or vapours to be controlled,
wherein the organic semiconductor belongs to one of the following groups:
– aromatic amines or polyamines salifyed or not,
– indophenols,
– phenolic derivatives containing or not nitrogenous functions and/or carboxylic groups,
– aromatic azo or diazo derivatives containing or not other types of nitrogenous groupings,
– amino acids,
– polypropylenes or polyvinyl-pyridine as donor polymers,
and wherein the organic semiconductor is subjected to a preparation with solutions or atmospheres having variable oxidation levels.

2. A detection method according to claim 1, wherein the organic semiconductor product is subjected to a prior mixture with inert elements.

3. A detection method according to one of claims 1 or 2, wherein the organic semiconductor product is utilized according to a painting technique.

4. A detection method according to one of claims 1 or 2, wherein the organic semiconductor product is utilized according to an evaporation technique under vacuum.

5. A detection method according to one of claims 1 or 2, wherein the organic semiconductor is utilized according to a sintering technique.

6. A detection method according to one of claims 1 or 2, wherein the organic semiconductor is utilized according to an electroplating technique.

7. A detection method according to one of claims 1 or 2, wherein the organic semiconductor product is utilized by forming collodions.

8. A detection method according to one of claims 1 to 7, wherein the elementary sensible unit is subjected to complementary treatments such as an X or infrared irradiation or a compression.

9. A detection method according to one of claims 1 to 8, wherein a single sensitive unit or an assembly of the series and/or parallel type of several elementary sensitive units is disposed so as to cover a whole characteristic spectrum of the risk to be prevented, each sensitive unit providing per se alone a detection.

10. A detection method according to claim 9, wherein there are interposed between the captor and the medium to be protected filters or membranes having selective diffusion properties with respect to the gases or vapours to be detected, so as to provide also prevention of a specific risk by being free of parasites and dust.

11. A detection method according to one of claims 1 to 10, wherein two captors are used in a meter bridge, one serving as a reference.

12. A detection method according to one of claims 1 to 10, wherein the relative variations of the signals delivered by the captors are analyzed.

## Patentansprüche

1. Verfahren zum Anzeigen und Analysieren von Gasen oder Dämpfen, das zum Vermeiden von mit Bränden verbundenen Gefahren anwendbar ist und bei dem die zu schützende Umgebung durch eine sensible Elementeinheit kontrolliert wird, die ein organisches Halbleiterelement umfasst, dessen Leitfähigkeit in Gegenwart von zu überwachendem Gas oder überwachenden Gasen und bzw. oder Dampf oder Dämpfen anspricht, dadurch gekennzeichnet, dass der organische Halbleiter einer der folgenden Gruppen angehört:
– Aromatische Amine oder aromatische Polyamine, gegebenenfalls in Form von Salzen;
– Indophenole;
– Phenolderivate, die gegebenenfalls Stickstofffunktionen und bzw. oder Carboxylgruppen enthalten;
– aromatische Azoderivate oder aromatische Diazoderivate, die gegebenenfalls andere Arten von Stickstoffgruppen enthalten;
– Aminosäuren;
– Polyperylene oder das Polyvinylpyridin, sofern sie polymere Donatoren sind;
und dass man das organische Halbleiterprodukt einer Behandlung durch Lösungen oder Gase variabler Oxidationsstufen unterwirft.

2. Anzeigeverfahren nach Anspruch 1, dadurch gekennzeichnet, dass man das organische Halbleiterprodukt mit einem vorher hergestellten Gemisch aus inerten Elementen behandelt.

3. Anzeigeverfahren nach Anspruch 1 oder 2, dadurch gekennzeichnet, dass das organische Halbleiterprodukt mittels Anstrichtechnik verwirklicht wird.

4. Anzeigeverfahren nach Anspruch 1 oder 2, dadurch gekennzeichnet, dass das organische Halbleiterprodukt mittels Verdampfungstechnik unter Vakuum verwirklicht wird.

5. Anzeigeverfahren nach Anspruch 1 oder 2, dadurch gekennzeichnet, dass das organische Halbleiterprodukt mittels Frittierungstechnik (Sintertechnik) verwirklicht wird.

6. Anzeigeverfahren nach Anspruch 1 oder 2, dadurch gekennzeichnet, dass das organische Halbleiterprodukt mittels elektrolytischer Ablagerung verwirklicht wird.

7. Anzeigeverfahren nach Anspruch 1 oder 2, dadurch gekennzeichnet, dass das organische Halbleiterprodukt durch Herstellen von Kollodium verwirklicht wird.

8. Anzeigeverfahren nach einem der Ansprüche 1 bis 7, dadurch gekennzeichnet, dass die sensible Elementeinheit ergänzenden Behandlungen, wie einer IR- oder X-Bestrahlung oder einer Kompression, unterworfen wird.

9. Anzeigeverfahren nach einem der Ansprüche 1 bis 8, dadurch gekennzeichnet, dass man in Form eines Messfühlers eine einzige sensible Einheit oder eine Anordnung von mehreren sensiblen Elementeinheiten in Serie und bzw. oder parallel vorsieht, derart dass ein kennzeichnendes Spektrum von zu vermeidenden Gefahren zur Gänze abgedeckt wird, wobei jede sensible Einheit für sich allein eine Anzeige sicherstellt.

10. Anzeigeverfahren nach Anspruch 9, dadurch gekennzeichnet, dass zwischen den Messfühler und die zu schützende Umgebung Filter oder Membranen zwischengeschaltet werden, die gegenüber anzuzeigenden Gasen oder Dämpfen selektives Diffusionsvermögen aufweisen, derart, dass sichergestellt wird, dass durch Entstörung und Entstaubung spezifische Risiken vermieden werden.

11. Anzeigeverfahren nach einem der Ansprüche 1 bis 10, dadurch gekennzeichnet, dass man zwei Messfühler in eine Messbrücke einsetzt, wobei der eine als Bezugseinrichtung dient.

12. Anzeigeverfahren nach einem der Ansprüche 1 bis 10, dadurch gekennzeichnet, dass man die relativen Veränderungen des durch den Messfühler gelieferten Signals analysiert.

*Fig.1*

*Fig.2*

*Fig.3*

0 022 028

Fig:4

$0.42 \times 10^{10} \Omega$    $6.70 \times 10^{10} \Omega$

Fig:5

$2.54 \times 10^{7} \Omega$    $0.54 \times 10^{7} \Omega$    $2.65 \times 10^{7} \Omega$

Fig:6

$2.20 \times 10^{6} \Omega$    $4.13 \times 10^{6} \Omega$

13

## Fig. 7

$\Omega$

$t$

2.72×10¹¹Ω    5.70×10¹¹Ω

## Fig. 8

$\Omega$

$t$

1.39×10¹¹Ω    3.33×10¹¹Ω

## Fig:9

0,75 x 10¹¹Ω     4.9 x 10¹¹Ω

## Fig:10

0.02 x 10¹¹Ω     4.20x10¹¹Ω

## Fig:11

0.03 x 10⁶Ω     0.64 x 10⁶Ω

Fig:12

4.39 x 10¹¹ Ω        10.49x10¹¹Ω

Fig:13

<10⁹ Ω        1.5 x 10¹² Ω

## Fig.14

$2.65 \times 10^{11} \Omega$    $14.28 \times 10^{11} \Omega$

## Fig.15

$1.15 \times 10^{11} \Omega$    $13.9 \times 10^{11} \Omega$

## Fig.16

$0.3 \times 10^{6} \Omega$    $0.55 \times 10^{6} \Omega$

*Fig.17*

*Fig.18*

# Fig. 19

3.60×10¹⁰ Ω   5.67×10¹⁰ Ω

# Fig. 20

3.75×10¹⁰ Ω   5.83×10¹⁰ Ω

*Fig. 21*

*Fig. 22*

## Fig.23

7.30x10¹¹Ω          13.20x10¹¹Ω

## Fig.24

0.02x10¹¹Ω     4.20x10¹¹Ω

## Fig.25

0.02x10¹¹Ω          2.62x10¹¹Ω

0 022 028

Fig. 26

$0.75 \times 10^{11} \Omega$

$4.90 \times 10^{11} \Omega$

Fig. 27

$0.39 \times 10^{11} \Omega$

$1.3 \times 10^{11} \Omega$

Fig. 28

$0.29 \times 10^{11} \Omega$

$2.62 \times 10^{11} \Omega$

31